# EUROPEAN PATENT APPLICATION

(11) **EP 0 596 055 A1**
(43) Date of publication of application: **11.05.1994**
(21) Application number: 93907872.1
(22) Date of filing: 01.04.1993
(51) Int. Cl.: H04Q 7/04, H04M 17/02, H04M 15/28

(54) **COIN CASHING SYSTEM FOR MOBILE TELEFONY**

(30) Priority: 13.04.1992 ES 9200797; 04.03.1993 ES 9300435
(71) Applicant: ADT ESPANA, S.L., E-5008 Zaragoza (ES); AUTOMOCION MONCAYO, S.A., E-50010 Zaragoza (ES)
(72) Inventor: BAS BAYOD, Francisco, E-50008 Zaragoza (ES)
(74) Representative: Urizar Anasagasti, José Antonio
(86) International application number: ES9300023
(87) International publication number: WO9321740

(57) **Abstract**

Coin cashing system for mobile telephony in order to facilitate the making of telephone calls by means of a moving telephone with a coin cashing system, mainly in public transport means such as buses, airplanes, trains, ships, etc., the system being provided with normal operation modes as rating device, exchange rate device and cash verification system to visualize the amounts and time units available. The system is comprised of a control subsystem (1), a coin selectioning and cashing subsystem (2), a display subsystem (3) and a supply subsystem (4).

## Description

The present invention, as indicated in the title, relates to a coin charging system for mobile telephony, being adaptable to any apparatus of mobile telephony which uses the present cellular technology, or any other which may be used in the future (for example telephony via satellite); and capable of rating automatically, said rating being susceptible of changes in the chasing quantities be it the initial or that of by passes.

### BACKGROUND OF THE INVENTION

It is well known that the communication by telephone is ever more necessary in today's lifestile. Industries, commerces and even particular persons find themselves more and more necesitated to establish communications, even from places out of offices or homes. On the other hand, the infra-structure required for giving service of conventional telephony is in any point of the world excessively expensive in order for it to be feasible. Thin has given rise to the appearance of cordless mobile telephony the terminals of which can be carried by the user or inside a vehicle while he moves from one point to another. Said mobile telephony systems require that the user is subscribed to the services which to that effect are offered by telephone companies. The problem can rise when a user not subscribed to such services need to make a call while he istravelling from one point to another, or he is in a place where the conventional telephony cannot offer such a service.

A coin charging system for mobile telephony is known which, although in some part it responds to the need of the user, presents drawbacks in other aspects as to its capacity and operation.

One drawback of the mentioned system is that the mobile telephone and the corresponding charging system are integrated, forming one single apparatus, which does not allow said system to be adapted to other mobile telephones, thus limiting its efficiency to only one assembly.

On the other hand, said system only accepts one type of coin (Sterling Pound), for which its use will be limited to one specific country.

Another disadvantage of said system is that once the coins are introduced and the communication is established, it does not return the coins which are not used; moreover, as soon as the number is launched by the user, the charging starts without having into account the possibility of the line to be busy or that of a delay in answering the call.

Another drawback of the known system is that the rate per minute is prefixed and cannot be changed in an easy mannerby non-especialized persons. This obliges the user of the system to ask for help of an expert involving the corresponding economic costs therewith.

### DESCRIPTION OF THE INVENTION

In order to solve the problems hereinabove exposed, the coin charging system for mobile telephony, as the object of the invention, is proposed which can be adapted to any mobile telephone of the market at present and to other mobile telephony services which might appear in the future by means of slight modifications. This system accepts at present five types of coins as to their vlaue and is easily adaptable to any other group of coins being new coins of thesame country or foreign coins.

The system is capable of returning the coins not used, since it has a lung of eight coins.

The system presents two options of charging: by constant passes (for example each 1/14 of minute which is a period similar to that used by the Telephone Company in its chargings) or by variable passes, based on detection of the rating signal which the operating company sends to the mobile telephone. In the first case, the charging starts to be effected when the communication with the subscriber to whome the call is made, is established, due to the detection made on the audio signal coming from the mobile telephone.

In the second case, the charging is made according to the cadence marked by the rating signal sent by the operating company and read from the transceiver by the present charging system.

The pass and the initial ratings are easily modifiable without the need of intervetion of specialized personnel.

Additionally the system offers the possibility of monitoring the quantity of money accumulated in the collecting box, the total number of passes of the telephone comany in the communication, the total connection time (per 1/14 of minute) prior to the establishment of the communication, thettal number of calls and the total time in communication (per 1/14 of minute), said values being initializable by the person in charge of maintenance.

Optionally the system provides a remote monitorizing system as to its state and in two versions: active and passive.

The system comprises a mechanic and an electronic part.

The mechanic part utilized comprises a coin selector which detects the value of the coins inserted and rejects non-legal coins, and a retaining charging and returning mechanism totally controlled by a micro- controller (incorporat in the electronic part) by means of a motor for positioning, a number of photoelectric sensors of position and passage detection of the coin and an electromagnetic coil for charging. The components of this part of the system are conventional and hence reference will be made to them in relation to the whole system.

The electronic part of control is based on a micro-controller with capacity to respond to the needs of operation of the system. This micro-controller exerts control on a display device, a number of elements for communication with the person in charge of maintenance, a coin mechanism with selector and a system of mobile telephone.

The system of mobile telephone in turn consists of the mobile telephone itself, a power supply device thereof, an interface for audio signals, a connection detecting circuit, a keyboard activating and blocking circuit, a circuit for detection of multifrequency tones (optional) and an interface for the reception of the rating signal.

### DESCRIPTION OF DRAWINGS

Figure 1 represents the global block diagram of the charging system object of the invention.
Figure 2 represents a squematic diagram in which the principal components of the system are observed.
Figure 3 is a flowchart that corresponds to the RATING mode of the system.
Figure 4 is a flowchart that corresponds to the VERIFICATION mode of the system.
Figure 4a is a partial flowchart that corresponds to the NORMAL mode of the system.
Figures 5b, 5c, 5d bis, 5e and 5e bis are partial flowcharts inter-related with each other and with the diagram of figure 5a. Figures 5a, 5b, 5c, 5d and 5e show the operation in NORMAL mode in rating by constant pass. Figures 5a, 5b, 5c, 5d bis and 5e bis show the operation in NORMAL mode when the rating signal of the operating company is used.

### EXAMPLE OF AN EMBODIMENT

Prior to identifying the system, a brief description is made of the communication interfaces between the main constituent elements of a mobile telephone used by said system in order to obtain or transmit information to transceiver.

Mobile telephones used as a complement of the rating system are composed of two different elements: the transceiver and the microtelephone. Between the two apparatus an interchange of information is established by means of a cable which comprises various conductors, among which generally one can distinguish: the transmison data conductor (CDT), which carries the corresponding information to the pressed keys in the microtelephone; the reception data conductor (CDR); and the data control conductor (CCD), used by the transmitter in order to synchronise the transmitted signals either through CDT, or through CDR.

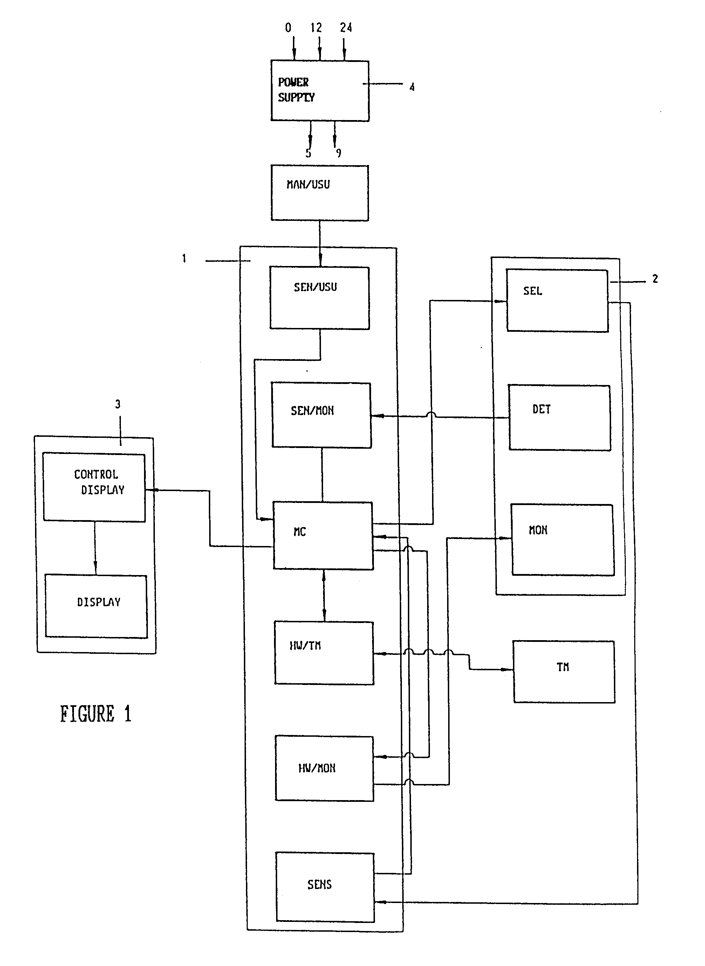

As it can be observed from figure 1 the charging system object of the invention, comprises a control subsystem (1), a coin selection and charging subsystem (2), a disply subsystem (3) and a supply subsystem (4). The function of each subsystem is hereinafter disclosed.

The supply subsystem contains the necessary circuitary for filtering and converting the current coming from the supply batteries to the working currents of the system.

The MAN/USU block includes the different contro units that the user utilizes in order to change tariffs, display totals, store telephone numbers and recover coins. This block is connected to SEN/USU which contains the adecuate interfaces for the signals coming from the subsystem which permit the detection of the actions of the user by the control subsystem.

SEN/MON contains the interfaces for the signals coming from photoelectric sensors of positioning and detection of charging (DET), situated in the coin charging and returning mechanism (MON).

The block MC includes the microcontroller, the auxiliar circuitary thereof and the interfaces for the different logic gates of input/output.

HW/TM includes the supply relay of the mobile telephone (TM) and the corresponding interface circuitary (RE); the interface for audio signals which includes an analogical switch for the audio signal transmitted by the microtelephone (IAA) and a circuit for squareing amplifier (AMC) optionally connected to a high order pass-band filter (F) for the received audio signal; the conection detecting circuit (DEC); the keyboard activating and blocking circuit (CABT); the multifrequency tone detecting circuit (CDTMF) (optionally); and the interface for CCD signal of the mobile telephone (TM) said signal being used in case of using the rating signal sent by the operating company.

HW/MON includes a transistor bridge circuit for activating the motor of the coin mechanism (MON) and the circuit of activating the charging coil.

SENS includes the interfaces for the signals coming from coin selector (SEL), which inform about the coins inserted by the user in the system.

The display subsystem (3) contains the circuitary for the control of a liquid crystal display or a 7 segment LED display, used in order to show the digits of the inserted amounts, rates and accumulated amounts, being directly connected to the control subsystem.

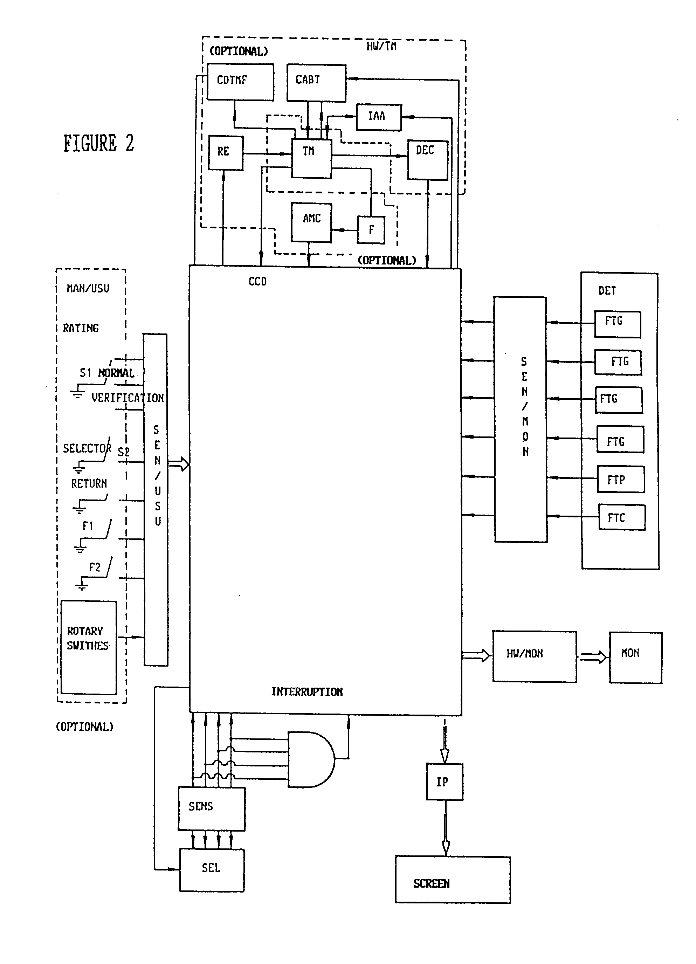

The system offers three operating modes denominated NORMAL, RATING and VERIFICATION. The NORMAL mode permits the device to operate as a rating device. In order to select the operating mode there is an internal selector (s1) of three positions (see figure 2) which is located inside the housing of the cabin and is only accesible for the maintenance. The mode RATING allows, according to the position of a second selector (s2), change either the initial rating, or the quantity per pass. The rating variation is carried out by using two push-buttons, one for increasing them (p1) and another for decreasing them (p2). These control units are located in the MAN/USU block.

The mode VERIFICATIOIN is used for displaying the collected amount since the last initialization, the total communication time (in 1/14 minute), the total time of connection prior to the communication (in 1/14 minute), the total number of the telephone company passes and the total number of calls. Additionally it permits the zeroing of the accumulated amounts. The selection of display of the collected amount or the total communication time is carried out by means of selector S2. The selction of the total time of connection prior to to the communication and the total number of calls is carried out by means of the same selector s2, while the push-button p2 is activated. The selection of the total number of telephone company passes is activated by pressing the return switch while selctor s2 is moved. The zeroing of the collected amount or the accumulated quantities related to time andthe number of calls is carried out with the same two push-buttons used for changing the ratings. Optionally in this mode the contact phone number for remote monitorization stored in the memory can be modified.

If having the switch s1 in NORMAL mode or in VERIFICATION mode, it is moved to RATING mode and the swith s2 is in initial quantity position, the initial quantity previously established will appear on the screen andcan be modified using push-buttons p1 and p2. If to the contrary, having the switch s1 in NORMAL or in RATING mode, it is moved to VERIFICATION mode, the quantity shown on the screen will be the quantity accumulated in cash box since the last zeroing if the switch s2 is in position of accumulated quantity, or the total communication time if s2 is in the other position. On the other hand, if by moving s2 the push-button p2 is maintained active, the total number of calls or the total time of connection prior to the communication will be displayed. Pressing the return switch, while selector s2 is moved the total numbre of telephonecom- pany passes will be obtained on the screen. Being in this mode, if sequentially first push-button p1 and then p2 are pressed in an interval of three seconds, the accumulated amount-depending on the position of switch s2-, or the four accumulated quantities related to the total number of calls, passes in communication, conection time prior to the communication and the toal communication time are initialized to zero.

Moving the switch s1 to NORMAL mode; the device can be used as rating device for telephone calls.

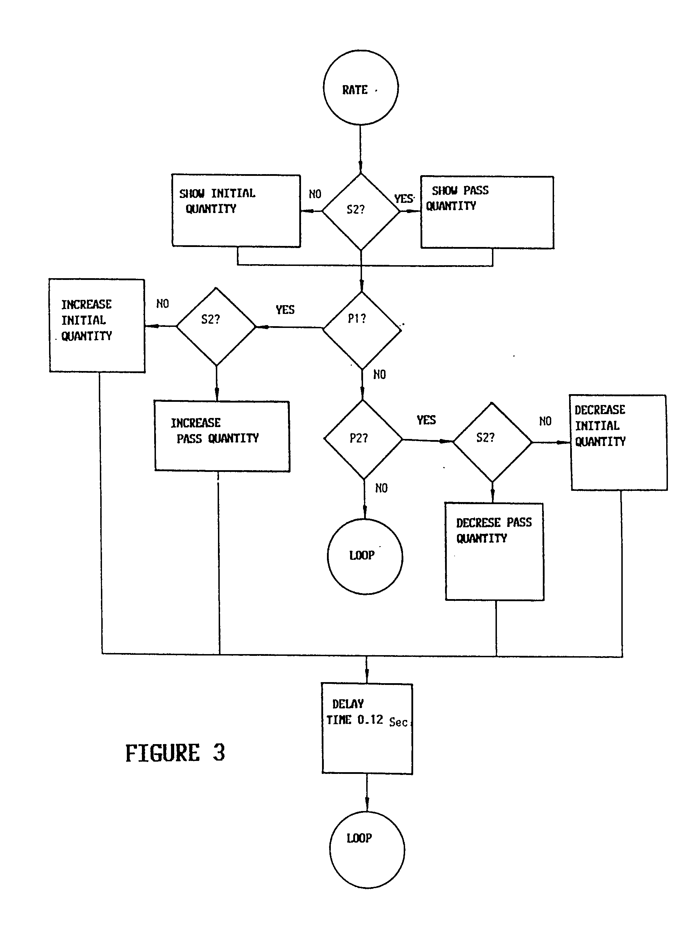

Refering to figures 2 and 3 the rating mode is hereinafter analyzed. The operation in RATING mode in order to change the quantity per pass is similar to the process of changing the initial quantity, except that the change is made in increment values which are different in one case with another for which only the first case will be disclosed. Figure 3 presents the states of the system according to which the changes of the initial quantity are carried out.

Both the rating per pass, and the initial quantity are defined in fractions of peseta, or any other foreign coin. The decimal fraction of the utilized coin, in which the rating increments are defined can be easily modified in the control program, being possible to work with tenths, hundredths, etc.

In order to change the ratingper pass, the operator situates the switch s1 in RATING position and s2 in position quantity per pass. In this situation, the microcontroller (MC) will read a logical zero in the terminal RATING and a logical 1 in the terminal VERIFICATION for which it will enter in mode RATING. Immediately, the microcontroller (MC) will take from the memory the value of the rating per pass, it will convert it to BCD code and will put it digit by digit in the digit bus which is connected to the screen interface circuit (IP), showing said value on the screen. For each digit to be shown, the microcontroller will send a control pulse so that said digit presented in the bus is memorized and shown on the screen.

Once the screen shows the rating, the microcontroller will continuously check the push-buttons p1 and p2. An activated push-button will cause the microcontroller detect a logical zero in the corresponding input, while the value read when disactivated will be logical 1.

Having p1 pressed, the microcontroller detects its activation, increases internally the quantity per pass and shows the same on the screen. It then enters in a delay loop of 0.12 second which serves to permit that the speed of increasing is adecuated to human perception after which the state of the push-button is again verified. The same process is done on push-button p2, except that the quantity per pass is decreased.

The process of increase/decrease can be used as many times as desired until the position of one of the switches is changed.

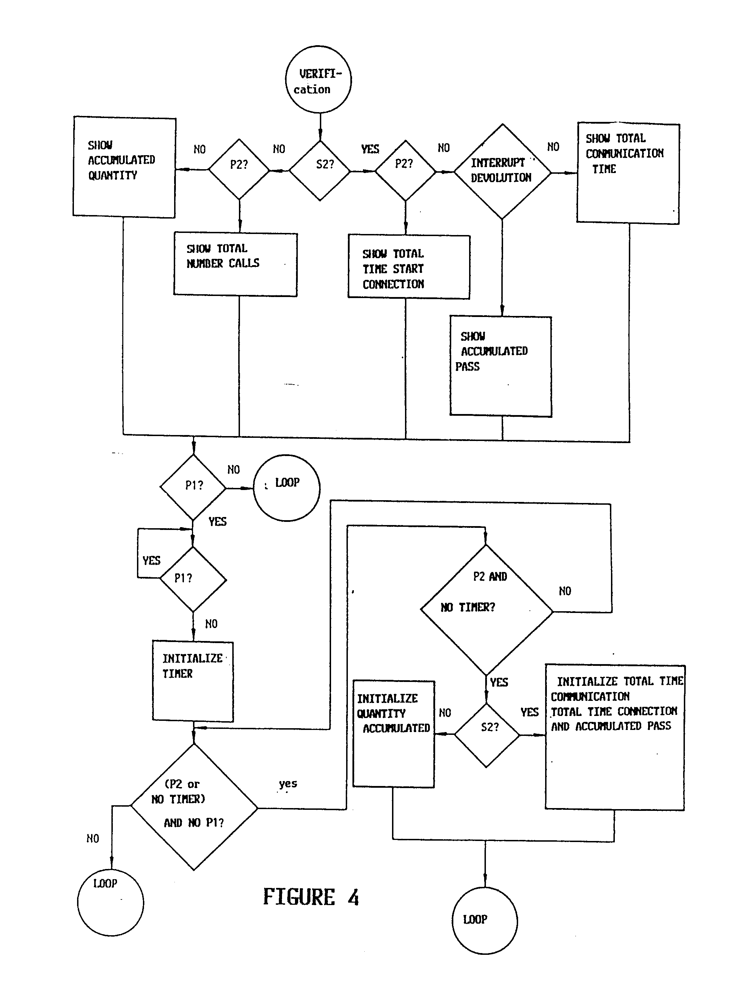

Referring to figures 2 and 4 the VERIFICATION mode is hereinafter analyzed.

Moving s1 to the mode VERIFICATION, the VERIFICATION terminal acquires a logical zero value and the terminal RATING will then have logical 1 vlaue. If s2 is in the position of accumulated quantity, said quantity is shown on the screen the same way as hereinabove described. The microprocessor will then wait for the reception of the initialization sequence. If p1 has been pressed and the pressing of p2 is delayed more than three seconds, or the expected sequence of p1-p2 is not received, the amount is then not initialized since after pressing p1, the microcontroller enters in a delay loop of three seconds during which only the pressing of p2 will be accepted. Anyother operation returns the system to the initial state. The same process is carried out with the accumulation related to the total number of calls, passes in communication, connection time prior to the communication or the total time in communication, if s2 is in theposition of the adecuate auxiliar push-buttons (p2 or the returning switch). The zeroing of said accumulated quantities is made simultaneously in all. This situation is maintained until switch s1 is changed.

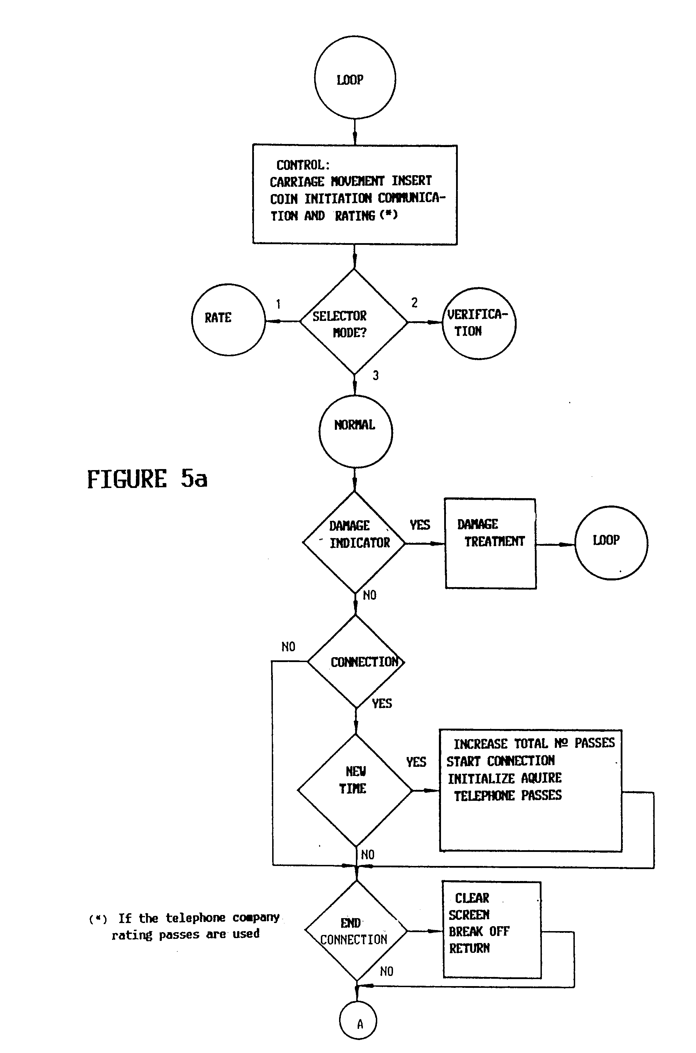

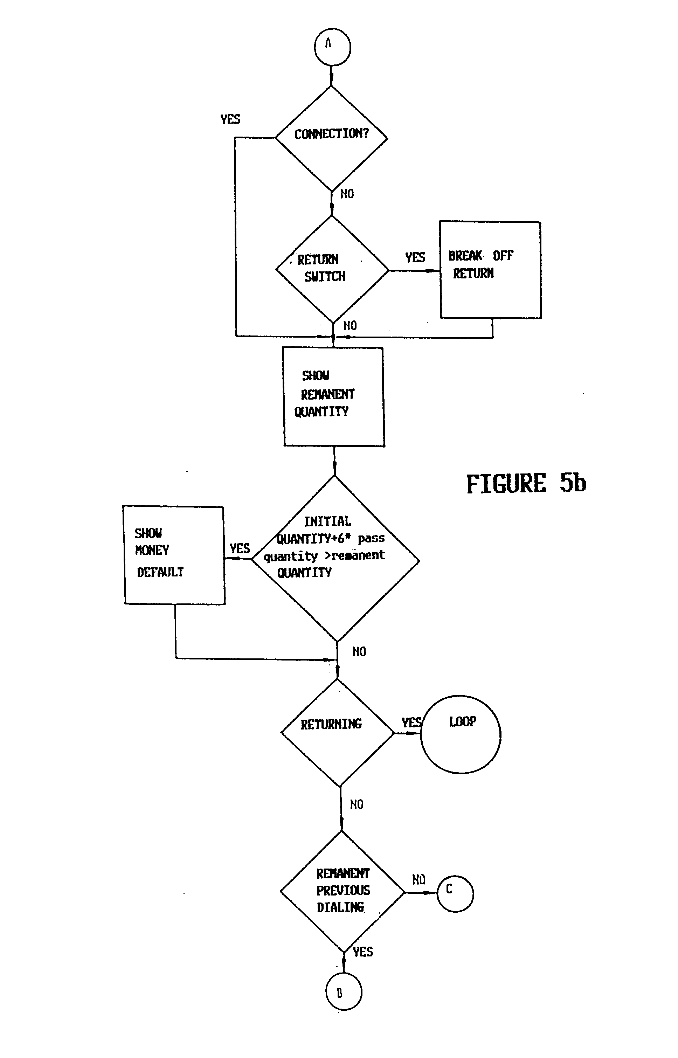

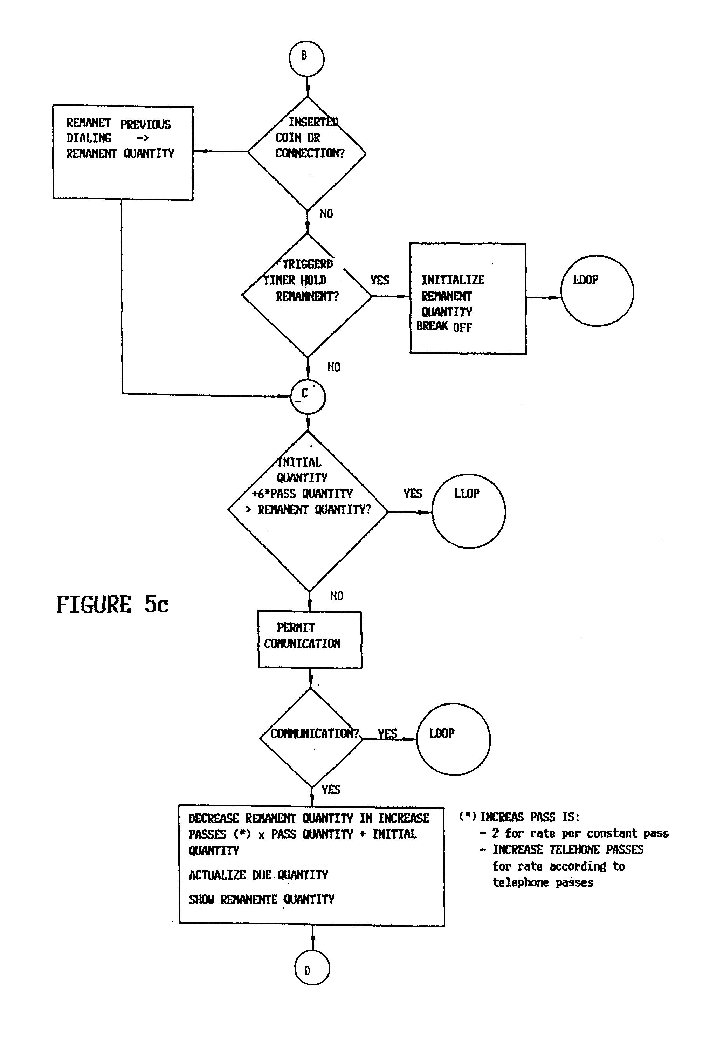

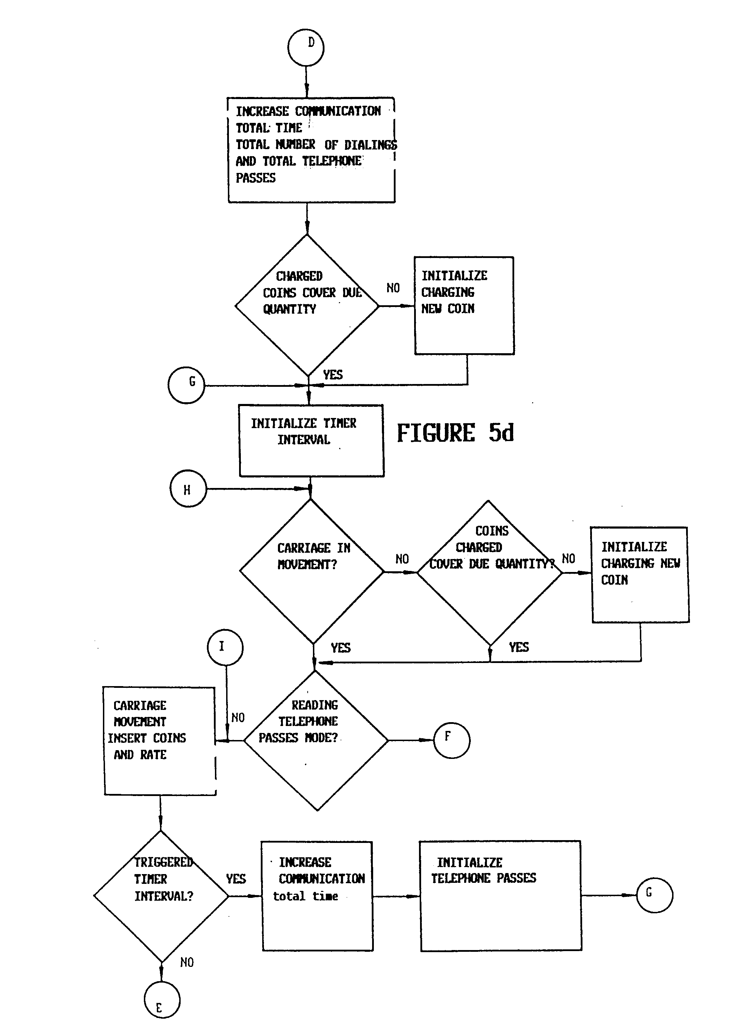

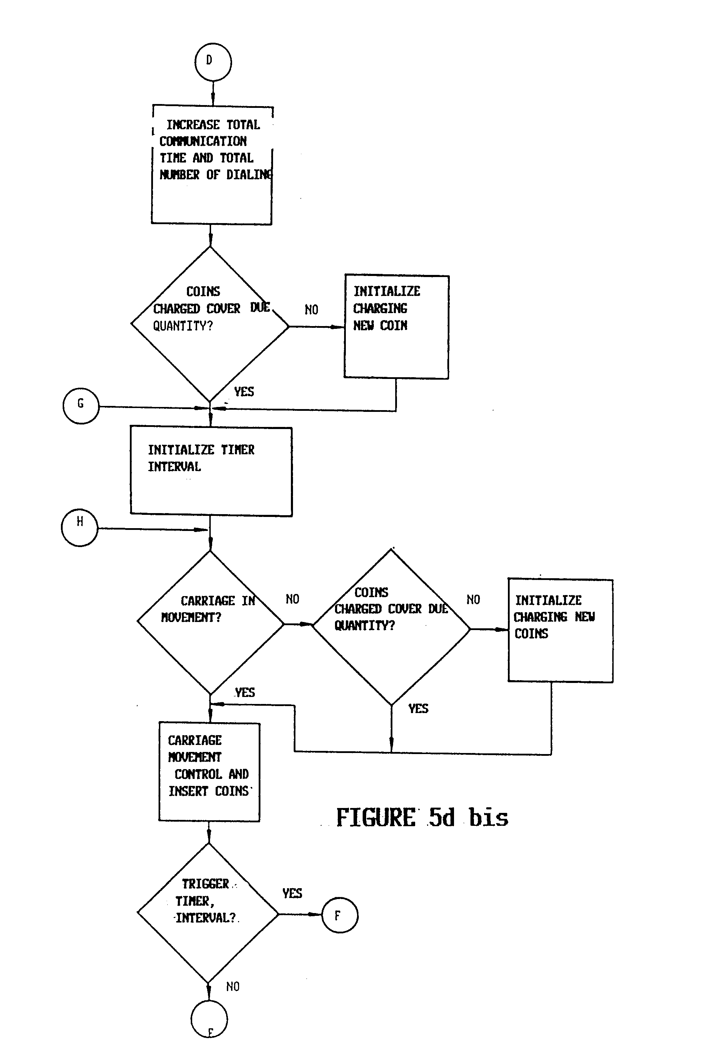

Referring to figures 2, 5a, 5b, 5c, 5d, 5d bis, 5e and 5e bis, the NORMAL mode in which the system operates as a rating device is hereinafter analyzed.

The switch s1 must be kept in NORMAL mode. In this mode, the screen will remain blank, being the supply relay of the mobile telephone (RE) deactivated, for which the former will not receive supply, and thus the microtelephone will remain off. In this situation, the system will permit the insertion of coin by the user, which will be accepted or rejected by means of selector (SEL), depending on if the latter recognizes them as valid or not.

### INSERTION OF COINS

The insertion or valid coins increases the remanent quantity which is shown on the screen. The microtelephonewill not be activated while said quantity is not sufficient for starting a communication.

The coin mechanism has a coin storage controlled by the microcontroller (MC). The storage is movable being activated by means of a direct current motor. One of the slots of the storage is alined with output selector (SEL) andwith the charging opening from which the coins fall into the cash-box. The charging opening is activated by means of a coil controlled by the microcontroller (MC). In the initialization of the system, the microcontroller (MC) would have positioned the coin mechanism (MON) in order to receive from the selector (SEL) one coin in the first slot.

Once the user has inserted a coin, the selector (SEL) determines its validity during the running course of the same. If it is not valid, it is automatically rejected. If it is valid, the selector (SEL) guides the coin until the corresponding slot of the coin mechanism (MON) and generates a single code for each type of coin which will appear in a bus of four bits which is read by the microcontroller.

The microcontroller should respond to said code with a confirmation signal, whithin a determined time margin outside of which the coin is rejected.

A logical circuit receives the signals generated bythe selector (SEL) when it receives a valid coin and generates an interruption signal which is connected to one of the interruption terminals of the microcontroller (MC). This interruption gives rise to the execution of arutine which detects the value of the coin, generates the confirmation signal and starts a one second timing, this latter being a time limit during which all the process of selection must have been carried out. The confirmation signal will be maintained active while some bit of the bus of the values generated by the selector is maintained active.

The activating process of the microtelephone and the subsequent actions are shown in figures 5c and the following figures depending on if the remanent amount is less or more than the necessary quantity in order to permit the communication.

After having detected the end of the generated signal by the exit of the coin from the selector (SEL), the microcontroller (MC) increases the value of the remanent quantity; dispalys the same on the screen as explained in the RATING mode; reset the state of the system; looks for the position of the closest empty slot; determines the coin of maximum value which will be selectioned during the following charging to be carried out; and deactivates the reception of coins. Immediately it enter in a loop in which the control of the motor ofthemechanism is executed, in order to place the empty slot, previously selected, on the charging opening. The microcontroller (MC) will use the information generated by the photo-transistors of the rough positioning (FTG), in order to place the slot in said position and the photo-transistor of precise positioning (FTP) in order to center the slot on the same.

Once finished the positioning, the microcontroller reactivates the reception of coins and the process will continue indefinitly.

### STARTING OF THE COMMUNICATION

The process of monitorization of the communication is observed in figure 5c and the following figures. Once the user has introduced the amount of money sufficient for covering the initial amount and the subsequent passes at the begining of the communication, the microcontroller (MC) commands to relay (RE) of suuply to the mobile telephone in order to supply current to the latter, with which the microtelephone will be activated and will permit the user start the communication. The process of introducing coins will continue as previously explained.

Parallel to the process of coin insertion and the movement of the mechanism, the microcontroller (MC) will be carrying out another activity in order to establish the moment in which the communication with the subscriber who is beingcalled, is made.

The connection detecting circuit (DEC), which is based on the fact that the supply current intensity consumed by the transceiver when transmitting is more than said intensity during stand-by, permits determine the moment in which the user sends the dialed number and the connection starts. The circuit consists of a comparator which generates a logical 1 value when said supply current exceeds a prefixed limit, being manintianed at a low level in the other case. The output of this circuit is read by the microcontroller (MC) which determines the state of the connection.

Once the state of connection is reached and detected, a monitorization state of the begining of communication is started which different depending on if the rating is carried out by constant pass or by variable pass.

In the case of constantpass rating, the interface for audio signals (squaring amplifier (AMCA) with or without pass band filter (F) and the analogical switch (IAA) is used to determine the instant in which the communication is started.

The audio signals sent to the microtelephone after dialing and sending the desired number, before connection between subscribers are formed by a periodic sequence of tones and silences in a similar manner as that of the signals generated by conventional telephony. The duration of the periods can oscilate however that of the periods of silence will in no way exceed 5 seconds. The tone is generated by a combination of sinusoidal waves whose maximum frequency component is in the neighburhood of 500 Hz. Once the communication has started, said signals give way to others of a totally non-periodical nature.

In order to detect the instant in which the connection is produced, the microcontroller (MC) checks continuously if the received signals are periodic and have a maximum frequency component close to 500 Hz.

This is done by means of a periodic interruption which will interrupt the execution of the main program with an approximate frequency of 7000 Hz. This interruption will detect the state of the audio signal received by the microtelephone. The interface for audio signals assures that the signal received by the microcontroller (MC) can be read and treated by the latter.

The analogic switch (IAA) for the audio signal transmitted by the microtelephone, is used to cancel the effect which this signal produces on the audio signal received, while periods of tones are being detected, said signal being interrupted during said periods. To do so, the microcontroller (MC) activates the control signal of said circuit, in such a manner that the signal does not appear at the output, which impides interference with the audio signal received. The squaring amplifier (AMC) generates square wave of a similar period as that of the first main harmonic of the audio signal received. This signal is optionally treated by a pass band filter (F) in order to obtain a sinusoidal signal with a frequency simlar to that of said harmonic.

The action taken by the microcontroller (MC) will be determined at every moment if the received audio signal corresponds to a tone period or to one of silence or communication. The microcontroller will initiate a timing each time one tone period is ended, be it due to a silence period or to the establishment of communication as defined. If the microcontroller detects a prolonged lack of tone (approximately 1/7 minute), it will estimate the communication has started and will act accordingly. The error in the estimation of the instant of initiation of the communication will be less than 1/7 minute. The sampling frequency (7000 Hz) permits detect without error the components of frequency higher than 600 Hz.

If the charging is made according to the telephone company rating signal, the system must periodically (each 1/14 minute) activate the transmission of the number of passes accumulated by the transceiver from the beginning of the communication. This information is sent by the transceiver through terminal CDR towards the microtelephone, and is controlled by said transceiver through terminal CCD.

The activation of the transmission is made by sending through terminal CDT a determined code of activation which depends on the brands and models of mobile telephones. To do so the keyboard activation and blocking circuit (CABT) should be used. Under normal conditions this code shouldbe sent through the keyboard, however CABT permits the microcontroller carry out this function automatically. The reception of the code by the transceiver gives rise to sending the number of passes accumulated on the microtelephone screen, said number being read and decoded by the microcontroller (MC) in order to determine the begining of the communication and calculate the amountto be charged at each moment.

The keyboard activation and blocking circuit (CABT) consists of a current follower for digital signal and a control logic associated thereto. Said logic permits the circuit, depending on the binary value of its control inputs, stay in three possible output stages: logical zero, logical 1 or acting as a follower. The circuit imbricates as interface for the signal received by transceiver which can be, depending on the state of the control inputs of CABT: 1) the signal sent bythe microtelephone, logical zero; or 3) logical 1.

In any of the two types of rating there exists the problem that the detection of the begining of the communication is carried out with a delay with respect to the instant in which it has really started for which it may giverise to free calls. In order to avoid this situation, by means of the keyboard activation and blocking circuit (CABT), it is impeded that the connection is rapidly interrupted.

The method used for avoiding free calls consists of maintaining the keyboard unblocked in the tone period of calls and blocked duringthe periods in which there is no tone. In this manner, the end of connection can only be produced in siad tone periods, or once the begining of the communication has been detected and the corresponding quantity has been charged. The blocking of the keyboard is obtained by maintaining the output of CABT at logical 1 with which the signals generated by the keyboard arenottrans- mitted to the transceiver.

The keyboard blocking circuit (CABT) may as well be used in other cases where it is necessary to impede the use of the keyboard by the user or it is required to send information to the transceiver without using the keyboard.

After having detected the begining of the communication, in any ofthetwo forms of rating, the microcontroller (MC) will decrease the quantity corresponding to the charging from the quantity inserted by the user, and will start a new timing period of 1/14 minute, upon which period the charging of the rating per constant pass and the reception of the information regarding accumulated passes in rating per variable pass are based (figure 5c). At the same time the microcontroller will command the motor to move to the charging position previously determined, and will calculate the position of the next charing slot. The folwcharts of figures 5d for rating according to the passes of the telephone company, and 5d bis, for the ratingper constant pass, correspond to the process which should be followed in order to carry out the charging of coins. The charging of a new coin will start at the moment when the a timing period has ended and with that the total value of the previously charged coin is consumed. The validation of the charging is done when the charged coin has activated the phototransistor for charging of acoin (FTC), situated at the exit of the charging slot.

After the end of the period of present timing, it is acted in a different manner depending of the type of rating used. In the case of rating per constant pass, the remanent quantity will be decreased by the value of one pass, this quantity being defined by the user in the RATING mode. In the case of rating per variable pass, the transmitter will be activated in order to send informatio to the number of accumulated passes, this information will be read and the number of passes occured from the last reading will be determinde, decreasing the remanent quantity by the corresponding value.

After having up-dated the remanent quantity, the new value will be shown on the screen, it will be determined if it is necessary to charge a new coin and a new period of timing will start. This process will be repeated until the user pushes the hung up key on the microtelephone, the connection is ended by external causes or the last inserted coin is consumed. If the quantity is really reduced under the determined value, the device will notify this showing on the display the "-" sign next to siad remanent quantity.

In the case of charging according to the telephone company ratings, there are two different options: that the charging will follow exactly the evolution of said rating signal, or that said signal is used only in order to determine the country to which the call is made, and later carrying out the rating per constant pass having value per pass depending on the country to which the call is made.

### RETURNING THE REMANENT COINS

If having coins in any of the slots, the user ends the communication or pushes the return key without having established a connection or if the connection is ended for external causes (figure 5b), the device will return said coins immediately. The return is executed by the microcontroller (MC), which commands the motor to advance to the coin storage to its limiting position in which there exists a limit point which gives rise to the opening of all slots with the consequent falling of the coins inside which are guided to the return cash-box.

### END OF COMMUNICATION

Once the user has activated the hung up switch situated on the microtelephone, the connection is terminated and the connection detection circuit (DEC) put its output at logical zero, this fact is detected by the microcontroller which provokes the return of the coins not used and the supply to the mobile telephone will be cut-off. The remanent quantity resulting from non-consumption of the last charged coin will be shown on the screen. The device permits that that said amount be used in a later communication for which the microcontroller (MC) starts a timing of 50 seconds during which the user should insert at least one coin, or start a new connection. If no coin is introduced nor a connection is started in that period, the remanent quantity is initialized to zero.

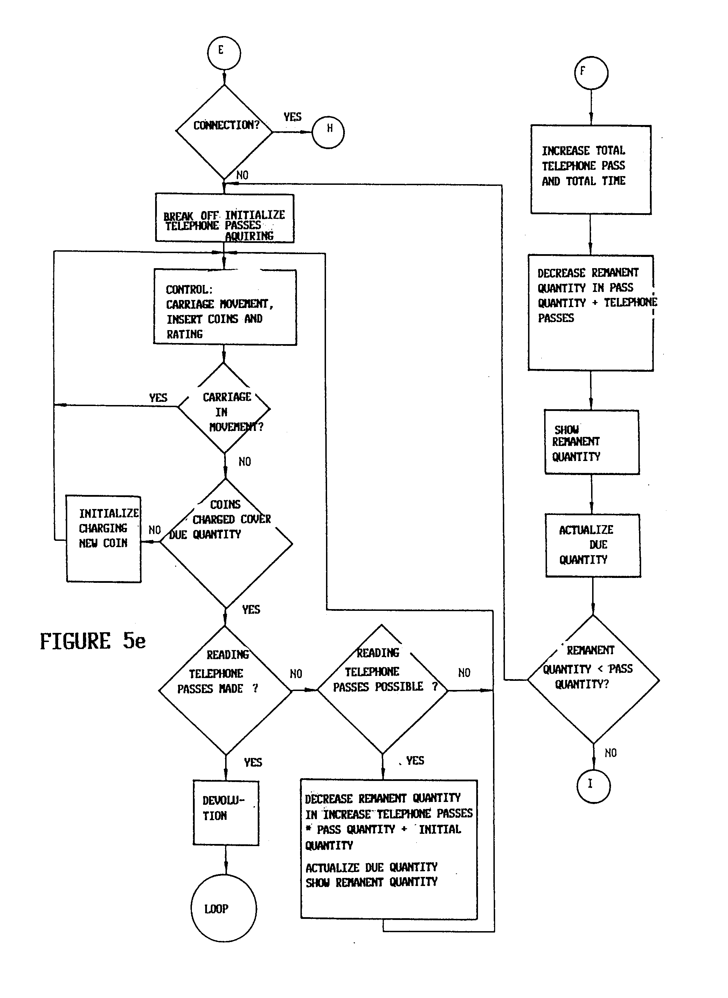

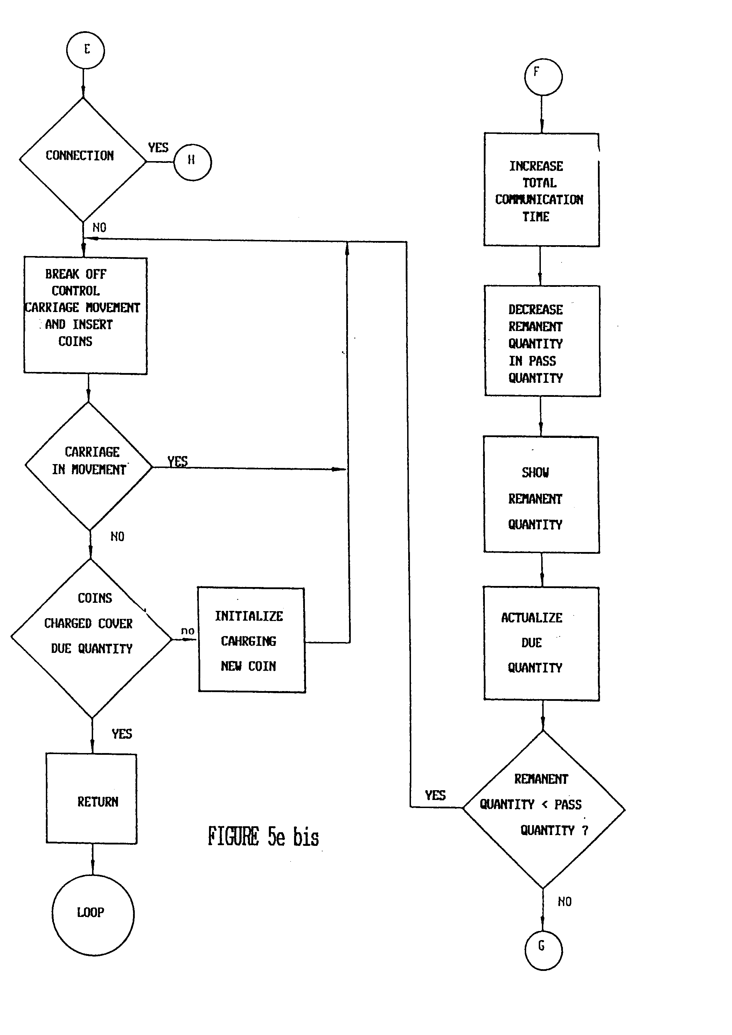

Figure 5e shows the flowchart of the ending process of the communication and return of remanent coins.

### REMOTE MONITORIZATION

Optionally a remote monitorization system for mechanic break-downs full cash-box and the state of the auxiliary equipments is introduced in two versions: active and passive.

Passive version: the exploiting agent calls the mobile telephone of the rating device in order to determine the state of the same. This is based on the fact that when it is intended to accede to a mobile telephone which is shut-off an error message generated by the telephone company is produced which notifies that the terminal is out of order.

Therefore, in order to indicate that the system is in break-down state, or that the cash-box is full, the rating system will maintain the supply relay of the mobile telephone activated for which the error message will no longer be generated. In this manner, the message will only be produced in the case that there is neither mechanic break-down nor the cash-box is full, for which the exploiting agent will be able to determine the state of the system making periodic calls to the corresponding mobile telephone. The keyboard activation and blocking circuit (CABT) is used in this case for impeding the making of free calls by blocking the keyboard as long as the communication is not possible.

In order to prevent situations in which, having inserted coins, by receiving the monitorization call the rating system charges without having produced a communication, a mechanism is provided which consists of the activation of a monitorization period. Said activation occurs when the transceiver receives a call which is detected by the connection detection circuit (DEC), and provokes a blocking in the insertion of coins and in the returning switch for a period of one minute, impeding the making of calls during this time and permitting the exploiting agent carry out the monitorization.

The algorithm corresponding to this process is the following:
If br2ak-doₖₖin
Activate supply relay of the mobile tele phone.
If end connection
If cash-box full
Activate supply relay of the mobile telephone.
If there are no tones
If there had not been communication Timing of 1 minute before permitting the insertion of coins, initiating a new communication or activating the return switch.

Active version: In this case it is the charging system itself which makes the monitorization calls when a mechanic break-down, the filling of the cash-box or the activation of any of the logic signals existing in the system and controlled by certain external auxiliary equipments to indicate a determined malfunctioning are produced. In the case where none of said condictions exists, the monitorization calls are produced in a periodical form, indicating the collected amount until that moment.

The system should dial and send the telephone number with which the contactisbeingmade. This dialing is made using the keyboard activation and blocking system (CABT). The telephone number will remain stored in the data memory or fixed through 9 rotative switches read by the microcontroller (MC). In the first case, the actualization of the number in memory will be done while the system is in VERIFICATION mode, and will be carried out by dialing the sequence of the corresponding digits in the microtelephone.

Once the communication with the dialed telephone is established, the interchange of information is carried out using multifrequency tones (according to CCITT norms). The system will generate tones through dialing the corresponding numbers made with CABT. For receiving and decoding the tones transmitted from the exterior, the system should have a multifrequency tone decoder circuit (CDTMF), which will detect said tones through its analogic input, generating in its output BCD codes corresponding to the received numbers which will be read by the microcontroller.

The process will be the following: once the break-down situation, the filling of the cash-box, the detection of a logical 1 in a digital input of monitorization, or the termination of the monitorization and the communication in process is produced, the system enters in a blocking period in which the insertion of coin, the use of thereturn switch and the begining of new calls are impeded.

The system will then proceed to dial the contact number and send the same. From this moment an interchange of information between the exerior and the charging system is produced in which the exterior is informed of the state of break-down or not, of the amount collected until that moment and the state of the digital signal of monitorization. On the other hand the charging system is informed of the new value of the period of monitorization and the new contact telephone number, if applicable.

The corresponding algorithm will be:
If end communication
If (br2ak-down or full cash-box or monitorization period ended or any monitorization input activated) and end communication.
Block insertion of coins, starting a new communication and the activating of the return switch.
Dial and send contact number by means of CABT.
send to the exterior information relative to the state of break-down, accumulated quantity and the value of monitorization signals by menas of CABT.
Receiving information form the exterior of the new contact telephone number and the new monitorization period, through CDTMF

Having sufficiently described the nature of the present invention, as well as one way of putting it into practice, it only remains to be added that it is possible to introduce changes of form, material and disposition in the whole invention or in part of which it is composed of, as long as said changes do not substantially vary the characterisitics of the invention claimed as follows:

## Claims

1. Coin charging system for mobile telephony, of the type used in order to facilitate making calls with mobile telephone by means of charging coins mainly in public transport means such as buses, airplanes, trains, ships, etc, and in zones where the conventional telephony is not available: characterized by presenting three modes of functioning: NORMAL, RATING, and VERIFICATION, in such a manner that the NORMAL mode permits the system operate as rating device, the RATING mode permits the change of initial and quantity per pass ratings, and the VERIFICATION mode permits the visualization of the collected amount, the total communication time, the total connection time until the communication is started, the total number of calls and the total number of the passes of the telephone company, as well as performing the zeroing of siad quantities. The system is further characterized in that it comprises a control subsystem (1), a coin selectioning and charging subsystem (2), a display subsystem (3) and a power supply subsystem (4).

2. Coin charging system, according to claim one, characterized in that the control subsystem (1) is essentially comprised of a microcontroller (MC) with the correspondinf interfaces for digital input/out (MC); the interfaces for the outputs of photoelectric sensors (SEN/MON) received from a coin charging and return mechanism (MON); the interfaces for the outputs coming from the user control units (SEN/USU); a circuitry for processing thesignals coming from the mobile telephone (TM) which consists of an interface for audio signals (which in turn contains a squaring amplifier (AMC) to condition the audio signal received by the microtelephone, preceded optionally by a high order band pass filter (F), and an analogical switch for the audio signal (IAA) transmitted by the microtelephone), a connection detection circuit (DEC), which determines the moment in which the mobile telephone enters in connection, a keyboard activation and blocking circuit (CABT), acting on the signal CDT, a multifrequency tone detection circuit (CDTMF), connected to the audio signal received by the microtelephone and an interface for the rating signal of the telephone company, received through the terminal CCD. Additionally, the control subsystem contains the supply relay (RE) of the mobile telephone and the auxiliary circuitry thereof; auxiliary electronics for the operation ofthe motor for the carriage movement and the charging coil of the coin mechanism (HW/MON); and the interfaces (SENS) for the signals received from the coin selector (SEL). The control subsystem is connected to the user control units (MAN/USU), to the coin mechanism (MON), to the coin selector (SEL), to the mobile telephone (TM) and to the display subsystem (3).

3. Coin charging system, according to the previous claims, characterized in that the display subsystem contains the circuitry for controlling a liquid crystal display or a LED 7 segment display in order to show the digits of the inserted amounts, rates and accumulated amounts, being directly connected to the control subsystem.

4. Coin charging system, according to previous claims, characterized in that the positioning of the mechanism for receiving or charging coins is made by means of a series of phototransistors of rough positioning (FTG) which are used for situating the charging slot in the adequate position, and a phototransistor of precise positioning (FTP) in order to center the slot with precision.

5. Coin charging system, according to previous claims, charactarized in that the operation mode in selectioned by means of a first switch of three positions (s1), with a second switch (s2) of two positions, which permits the selectioning of the rate which is desired to be modified or the accumulated amount which is desired to be displayed. Additionally it has two push-buttons (p1) and (p2) with functions of rate increase/decrease in the RATING mode. In VERIFICATION mode the push-buttons have two functions: zeroing and auxiliar element (with s2), used for displaying the accumulated quantities. The return switch with s2 permits display the total number of telephone company passes. The mentioned selectors, push-buttons and the switch constitute the group of user control units (MAN/USU).

6. Coin charging system, according to previous claims, characterized in that once a valid coin is received, the selector generates a single code for each type of coin which will appear in four bit bus. If the microcontroller does not respond in a determined temporary time with a confirmation signal, the coin is considered as not valid this element being adaptable to any type of coin.

7. Coin charging system, according to previous claims, characterized in that there are two options for detecting the beginging of the rating per constant pass, the microcontroller (MC) detects the start of the communication, and once the detection has been made by means of connection detection signal (DEC), by means of a periodic sampling of 6993 Hz of the signal generated by the interface of the audio signals, the fundamental frequency of which coincides with that of the audio signal received by the transceiver. Said signal is generated by the square wave amplifier (AMC) which supplies square wave which can be directly read by the microcontroller (MC). Optionally, the AMC circuit may be preceded by a high order band pass filter (F). The analogical switch of the audio signal transmitted by the microtelephone (IAA) provides that said signal is not interfered with the received signal when tone periods are being detected.
The values sampled are later microprocessed. A special digital filter isapplied to the signal generated by AMC, before processing. When a prolonged lack of a tone period is detected, the communication is considered to have started, for which the precise detection of the begining of the communication is marked out by the maximum value of separation between tones. After the moment of detecting the start of the communication, the charging is done per constant pass (1/14 minute).
In the second option, the rating passes are used which are sent by the telephone company in order to establish the begining of the communication and for determining the quantities to be charged during the calls made. The information related to the passes is taken by the microcontroller of the transceiver of the mobile telephone (TM) through the interface terminals between the transceiver and the microtelephone CDR and CCD.

8. Coin charging system, according to previous claims, characterized in the it impedes making free calls due to the existing delay between the begining of the communication and the detection of the same by the charging system. This is done by blocking the keyboard by means of the keyboard activation and blocking circuit (CABT), in the periods in which a tone is not detected, unblocking the same during the tone periods or when detecting the begining of the communication. Therefore, the communication can only be finished in tone periods or when the begining of the communication has been detected.

9. Coin charging system, according to previous claims characterized in that the returning of the coins is carried out by the microcontroller (MC) which commands to a motor to advance the storage unit until its limiting position, in which there exists a limit point which gives rise to the opening of all slots, provoking that the coins contained therein are guided to the return cash-box.

10. Coin cashing system, according to previous claims, characterized in that it permits a remote monitorization of its break-down state, of the actual amoun collected and the state of the auxiliary equipments ( by means of activating of microcontroller input digital signals) carried out by means of calls made to the mobile telephone included in the system (passive version), or by means of calls made by the mobile telephone itself to another contact telephone which is produced when the operation is no longer normal, or periodically in another case (active version).

11. Coin cashing system, according to previous claims, characterized in that it is adaptable to any mobile telephone of any brand or any country by means of slight modifications. In the same manner, it is adaptable to other uses of cord-less mobile telephony such as mobile telephony via satelie and any other type of mobile telephony which may de developed in the future.
